# EUROPÄISCHE PATENTANMELDUNG

(11) **EP 3 425 930 A1**
(43) Veröffentlichungstag der Anmeldung: **09.01.2019**
(21) Anmeldenummer: 17179329.2
(22) Anmeldetag: 03.07.2017
(51) Int. Cl.: H04W 4/00, H04W 4/20, H04W 4/22, H04H 20/53

(54) **VERFAHREN ZUR ZUSTELLUNG VON EINER FÜR EINEN UNBESTIMMTEN PERSONENKREIS VORGESEHENEN INFO-MELDUNG**

(71) Anmelder: Siemens Schweiz AG, 8047 Zürich (CH)
(72) Erfinder: SCHMID, Rolf, 8713 Uerikon (CH)
(74) Vertreter: Maier, Daniel Oliver

(57) **Zusammenfassung**

Erfindungsgemäss ist ein Verfahren zur Zustellung von einer für einen unbestimmten Personenkreis vorgesehenen Info-Meldung (2), wie z.B. Tourismusinformationen, Fahrgastinformationen, Bahnhofsdurchsagen, Einkaufsinformationen, an ein mobiles Kommunikationsgerät (4), wobei die Info-Meldung (2) als akustische Durchsage zur Verfügung gestellt wird, vorgesehen, welches die folgenden Verfahrensschritte umfasst:
a) Bereitstellen der Info-Meldung (2), wobei die Info-Meldung (2) mit einer Ortsinformation assoziert ist;
b) Bereitstellen einer Applikation für das mobile Kommunikationsgerät (4), insbesondere Smart Phone, PDA, mittels der die Info-Meldung (2) getriggert durch ein Triggerereignis durch das mobile Kommunikationsgerät (4) abrufbar ist;
c) Assoziieren eines Senders (16) für das Aussenden des Triggerereignis mit einem Lautsprecher (12) zum Aussenden der akustischen Durchsage;
d) Auslösen der Aussendung eines das Triggerereignis repräsentierenden Funksignals (20) bei Aussendung der akustischen Durchsage, wobei das Funksignal (20) eine Ortsinformation mit oder ohne Zeitreferenz umfasst;
e) Empfangen des Funksignals (20) an dem mobilen Kommunikationsgerät (4);
f) in Antwort auf den Empfang des Funksignals (20) Abrufen der zu der mit der im Funksignal (20) enthaltenen Ortsinformation korrelierenden Info-Meldung (2) auf das mobile Kommunikationsgerät (4); und
g) Ausgeben der Info-Meldung (2) auf dem mobilen Kommunikationsgerät (4).

## Beschreibung

Die vorliegende Erfindung bezieht sich auf ein Verfahren zur Zustellung von einer für einen unbestimmten Personenkreis vorgesehenen Info-Meldung, wie z.B. Tourismusinformationen, Fahrgastinformationen, Bahnhofsdurchsagen, Einkaufsinformationen, an ein mobiles Kommunikationsgerät, wobei die Info-Meldung primär als akustische Durchsage zur Verfügung gestellt wird.

Akustische Durchsagen (auch Lautsprecherdurchsagen genannt) in Fahrzeugen, wie Bahn, Bus, Schiff oder Seilbahn, in Gebäuden, wie Shopping-Mall, Bahnhof, Bahnsteig, Warteräumen, informieren einen Fahrgast oder Besucher zeit- und ortsgerecht. Die durchgesagte Info-Meldung richtet sich dabei an einen unbestimmten Personenkreis, wobei es aufgrund von Umgebungslärm und/oder akustischer Verzerrungen häufig nicht möglich ist, dass der Adressat der Info-Meldung diese auch tatsächlich versteht. Die Lautsprecherdurchsagen haben zudem den Nachteil, dass besonders im touristischen Umfeld nicht alle vielleicht erforderlichen Sprachen abgedeckt werden können.

Der vorliegenden Erfindung liegt daher die Aufgabe zugrunde, ein Verfahren zur Zustellung von einer für einen unbestimmten Personenkreis vorgesehenen Info-Meldung zu schaffen, bei dem die Info-Meldung in einer individualisierbaren Form von einem Adressaten wahrgenommen werden kann.

Diese Aufgabe wird erfindungsgemäss durch ein Verfahren zur Zustellung von einer für einen unbestimmten Personenkreis vorgesehenen Info-Meldung, wie z.B. Tourismusinformationen, Fahrgastinformationen, Bahnhofsdurchsagen, Einkaufsinformationen, an ein mobiles Kommunikationsgerät, wobei die Info-Meldung als akustische Durchsage zur Verfügung gestellt wird, gelöst, umfassend die folgenden Verfahrensschritte:
a) Bereitstellen der Info-Meldung, wobei die Info-Meldung mit einer Ortsinformation assoziert ist;
b) Bereitstellen einer Applikation für ein mobiles Kommunikationsgerät, insbesondere Smart Phone, PDA, mittels der die Info-Meldung getriggert durch ein Triggerereignis durch das mobile Kommunikationsgerät abrufbar ist;
c) Assoziieren eines Senders für das Aussenden des Triggerereignis mit einem Lautsprecher zum Aussenden der akustischen Durchsage;
d) Auslösen der Aussendung eines das Triggerereignis repräsentierenden Funksignals bei Aussendung der akustischen Durchsage, wobei das Funksignal eine Ortsinformation mit oder ohne Zeitreferenz umfasst;
e) Empfangen des Funksignals an dem mobilen Kommunikationsgerät;
f) in Antwort auf den Empfang des Funksignals Abrufen der zu der mit der im Funksignal enthaltenen Ortsinformation korrelierenden Info-Meldung auf das mobile Kommunikationsgerät; und
g) Ausgeben der Info-Meldung auf dem mobilen Kommunikationsgerät.

Auf diese Weise ist es möglich, dass ein Reisender/Besucher die über eine akustische Durchsage bereitgestellten Information auch in einer für ihn einfacher erfassbaren Form auf seinem mobilen Kommunikationsgerät zur Verfügung gestellt bekommt. Das Verfahren ist deshalb besonders einfach implementierbar, weil es sich im Wesentlichen auf der Bereitstellung (inkl. Installation der Applikation) und einen Dienst abstützt, der die durchgesagten Info-Meldungen auf einem Datenspeicher ablegt und mit Hilfe der aus dem Funksignal extrahierten Ortsinformation die Info-Meldung auf das mobile Kommunikationsgerät lädt, wo sie dann in lesbarer und/oder abhörbarer und/oder fühlbarer Form u.a. auch wiederholbar zur Verfügung gestellt werden.

In einer vorteilhaften Ausgestaltung der Erfindung kann es zum Auffinden der richtigen Info-Meldung hilfreich sein, wenn die Info-Meldung zusätzlich mit einer Zeitinformation assoziert ist. Ebenso kann es diesbezüglich hilfreich sein, wenn das Funksignal zusätzlich mit einer Zeitinformation assoziert ist.

Damit der Installationsaufwand für die Anordnung des Senders vergleichsweise gering gehalten werden kann, kann die elektrische Leistung für den Sender zum Aussenden des Funksignals aus dem Stromkreis des Lautsprechers ausgekoppelt werden oder als Triggersignal für die Aussendung verwendet werden. So kann beispielsweise das analoge Audiosignal (Lautsprechereingangssignal) im Zeitpunkt der Durchsage einen elektronischen Beacon (BLE bzw. iBeacon usw.) speisen. Diese Speisung bewirkt, dass ein codierbares Beacon-Signal zeitnah und ortsbezogen ausgesendet werden kann, z.B. auf 2.4 GHz, welches dann von den mobilen Kommunikationsgeräte der sich im Empfangsradius (Umkreis von einigen Metern bis 100 m beispielsweise) befinden Personen empfangen wird.

Im Zuge einer vollständigen Information des Benutzers kann die Info-Meldung als Text-Meldung und/oder als Audio-Stream und/oder als Video-Stream bereitgestellt sein. Weiter ist es möglich, dass die Info-Meldung durch die Applikation oder durch eine weitere zu diesem Zweck aufrufbare Applikation in eine vorbestimmbare Sprache übersetzt wird. Alternativ oder ergänzend kann die Info-Meldung in mindestens einer vorbestimmbaren Sprache bereitgestellt werden.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht ein Verfahren zum Empfangen einer über eine Lautsprecherdurchsage ausgegebene Info-Meldung an einem Smart Phone; und
- Figur 2: in schematischer Ansicht eine Ansicht der Informationsübertragung der Info-Meldung auf das Smart Phone.

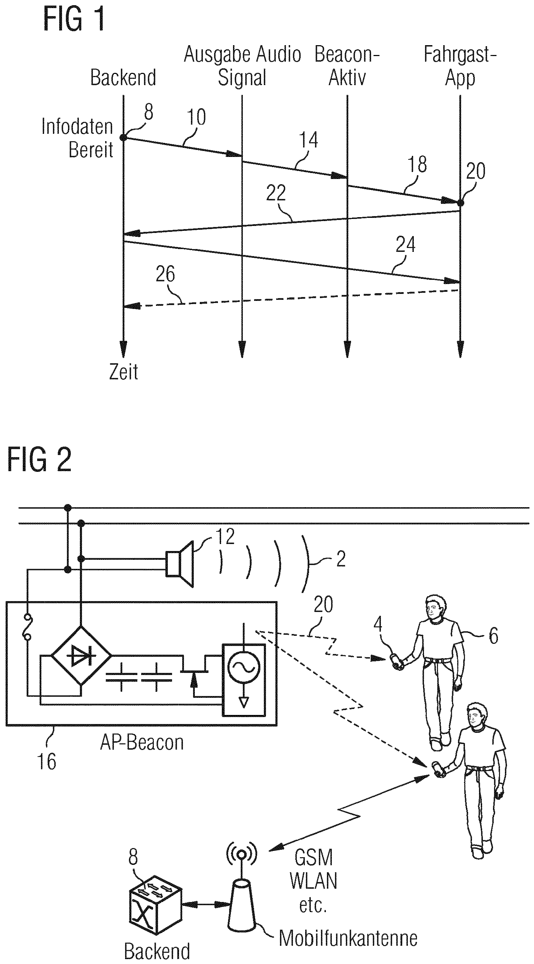

Figur 1 zeigt schematisch die wesentlichen Schritte eines Workflows, bei dem eine über eine Lautsprecherdurchsage an einem Bahnsteig ausgegebene Info-Meldung 2 an einem Smart Phone 4 eines Bahnreisenden empfangen wird. Zunächst wird die Info-Meldung 2 an einem Backend 8, wie zum Beispiel einem Daten-Server, bereitgestellt. In einem Schritt 10 wird die Info-Meldung 2 von dem Backend 8 zur Ausgabe an einen Bahnsteiglautsprecher 12 weitergeleitet. Mit der Aussendung der akustischen Info-Meldung 2, die zum Beispiel an einem Bahnsteig typischerweise Informationen zu Anschlusszügen und/oder Zugverspätungen und/oder Gleisänderungen beinhaltet, wird in einem Schritt 14 der elektronischer Beacon 16 aktiviert, der in einem Schritt 18 getrieben durch das Eingangsaudiosignal des Lautsprechers 12 selbst ein Funksignal 20 absetzt, welches beispielsweise die Information über den Bahnhof und das Gleis, an dem der Lautsprecher 12 angeordnet ist, umfasst, z.B. "Zürich","Gleis 9". Zusätzlich kann dieses Funksignal 20 auch noch einen Zeitstempel umfassen. Am Ende dieser Signalkette empfängt nun das Smart Phone 4 das Funksignal 20 und kann mit einer darauf installierten Fahrgast-App erkennen, dass im Backend 8 nun unter den Kenndaten "Zürich" AND "Gleis 9" dort die Info-Meldung 2, die das Smart Phone 4 zu diesem Zeitpunkt (noch) nicht kennt, abrufbar sein müsste.

Dementsprechend gesteuert von der Fahrgast-App sendet das Smart Phone 4 über seine Mobilfunk- und/oder WLAN-Schnittstelle eine Datenanfrage unter Angabe der aus dem Funksignal extrahierten Ortsinformation an das Backend 8 mit der Aufforderung, die entsprechende Info-Meldung 2 in der in der im Backend 8 hinterlegten Form an das Smart Phone zu senden (Schritt 22). In einem Schritt 24 analysiert das Backend 8 die vom Smart Phone 4 empfangene Datenanfrage und sendet bei positivem Analyseergebnis die Info-Meldung 2 in der im Backend hinterlegten Form (typischerweise ein Text-, Audio- und/oder Video-File) über GSM, LTE, WLAN etc. an das Smart Phone 4. Der Fahrgast 6 kann die so auf seinem Smart Phone empfangene Info-Meldung 2 nun beliebig oft entsprechend lesen/anhören/ansehen und ist so in der Lage die manchmal durch den Umgebungslärm und/oder akustische Verzerrungen unverständlichen Lautsprecherdurchsagen in Ruhe und individuell wahrnehmen zu können. Optional könnte das Smart Phone 4 diesen Empfang der Info-Meldung 2 auch wieder zurück an das Backend 8 quittieren (Schritt 26).

Bei einer entsprechende Ausgestaltung der Fahrgast-App könnte die Info-Meldung 2 beispielsweise auch noch in einem von der Fahrgast in den App-Einstellungen gewählte Sprache übersetzt werden, oder falls in dem Backend 8 die Info-Meldung 2 in mehreren Sprache hinterlegt ist, in der von ihm favorisierten Sprache auf das Smart Phone 4 geladen werden.

Ein besonders Pfiff der vorliegenden Erfindung liegt darin begründet, dass die Aussendung des Audiosignals (Info-Meldung 2) automatisch die Aussendung des Funksignals 20 auslöst, welches dann von dem Smart Phone 4 empfangen und mit der darauf zuvor installierten APP (geladen z.B. über Google Playstore, iOS Store) ausgewertet wird. Zudem ist der elektronische Beacon 16 - wie schematisch in Figur 2 gezeigt - ohne grössen Aufwand parallel zum Lautsprecher 12 schaltbar und so bereits funktionstüchtig. Unter der Annahme, dass das Lautsprechersignal (analoge Audiosignal) mit etwa 3 bis 10 Watt Leistung am Lautsprecher 12 ankommt, kann die notwendige Energie zum Betrieb des elektronische Beacons 16 von etwa 10 mW bei 3.3 VDCohne Rückwirkung und Verzerrung dem Lautsprechersignal entzogen werden. Dieses Verfahren kann darüberhinaus in vielfältigster Weise verwendet werden, zum Beispiel in Bahnfahrzeugen, Schiffen, Luftseilbahnen, Warteräumen im Flughafen/Bahnhöfen, Bahnstationen, Einkaufszentren (Aussendung von besonderen Verkaufsaktionen, Ansage von Autogrammstunden, Rabattaktionen usw.) und in touristischen Regionen.

## Patentansprüche

1. Verfahren zur Zustellung von einer für einen unbestimmten Personenkreis vorgesehenen Info-Meldung (2), wie z.B. Tourismusinformationen, Fahrgastinformationen, Bahnhofsdurchsagen, Einkaufsinformationen, an ein mobiles Kommunikationsgerät (4), wobei die Info-Meldung (2) als akustische Durchsage zur Verfügung gestellt wird, umfassend die folgenden Verfahrensschritte:
a) Bereitstellen der Info-Meldung (2), wobei die Info-Meldung (2) mit einer Ortsinformation assoziert ist;
b) Bereitstellen einer Applikation für das mobile Kommunikationsgerät (4), insbesondere Smart Phone, PDA, mittels der die Info-Meldung (2) getriggert durch ein Triggerereignis durch das mobile Kommunikationsgerät (4) abrufbar ist;
c) Assoziieren eines Senders (16) für das Aussenden des Triggerereignis mit einem Lautsprecher (12) zum Aussenden der akustischen Durchsage;
d) Auslösen der Aussendung eines das Triggerereignis repräsentierenden Funksignals (20) bei Aussendung der akustischen Durchsage, wobei das Funksignal (20) eine Ortsinformation mit oder ohne Zeitreferenz umfasst;
e) Empfangen des Funksignals (20) an dem mobilen Kommunikationsgerät (4);
f) in Antwort auf den Empfang des Funksignals (20) Abrufen der zu der mit der im Funksignal (20) enthaltenen Ortsinformation korrelierenden Info-Meldung (2) auf das mobile Kommunikationsgerät (4); und
g) Ausgeben der Info-Meldung (2) auf dem mobilen Kommunikationsgerät (4).

2. Verfahren nach Anspruch 1,
**dadurch gekennzeichnet, dass**
die Info-Meldung (2) zusätzlich mit einer Zeitinformation assoziert ist.

3. Verfahren nach Anspruch 1 oder 2,
**dadurch gekennzeichnet, dass**
das Funksignal (20) zusätzlich mit einer Zeitinformation assoziert ist.

4. Verfahren nach einem der vorangehenden Ansprüche, **dadurch gekennzeichnet, dass**
die elektrische Leistung für den Sender (16) zum Aussenden des Funksignals (20) aus dem Stromkreis des Lautsprechers (12) ausgekoppelt oder als Triggersignal verwendet wird.

5. Verfahren nach einem der vorangehenden Ansprüche, **dadurch gekennzeichnet, dass**
die Info-Meldung (2) als Text-Meldung und/oder als Audio-Stream und/oder als Video-Stream bereitgestellt wird.

6. Verfahren nach einem der vorangehenden Ansprüche, **dadurch gekennzeichnet, dass**
die Info-Meldung (2) durch die Applikation oder durch eine weitere zu diesem Zweck aufrufbare Applikation in eine vorbestimmbare Sprache übersetzt wird.

7. Verfahren nach einem der vorangehenden Ansprüche 1 bis 5, **dadurch gekennzeichnet, dass**
die Info-Meldung (2) in mindestens einer vorbestimmbaren Sprache bereitgestellt wird.
